# EUROPÄISCHE PATENTANMELDUNG

(11) **EP 4 696 126 A1**
(43) Veröffentlichungstag der Anmeldung: **18.02.2026**
(21) Anmeldenummer: 25187259.4
(22) Anmeldetag: 03.07.2025
(51) Int. Cl.: A01D 41/12, A01F 7/06, A01F 12/44

(54) **VERTEILVORRICHTUNG FÜR EINEN MÄHDRESCHER**

(30) Priorität: 12.08.2024 DE 102024122915
(71) Anmelder: CLAAS Selbstfahrende Erntemaschinen GmbH, 33428 Harsewinkel (DE)
(72) Erfinder: Vieregge, Christopher, 32694 Dörentrup (DE); Beckmann, Hermann-Konstantin, 32584 Löhne (DE); Diekamp, Andreas, 49176 Hilter (DE); Lehmberg, Andreas, 33428 Harsewinkel (DE); Pickhinke, Paul, 48361 Beelen (DE); Pölling, Benedikt, 48653 Coesfeld (DE); Ackfeld, Lukas, 59329 Wadersloh (DE); Taucher, Christian, 31737 Rinteln (DE); Brandmeier, Jonas, 33428 Harsewinkel (DE)
(74) Vertreter: CLAAS Gruppe

(57) **Zusammenfassung**

Die vorliegende Erfindung betrifft eine Verteilvorrichtung (18) für einen Mähdrescher (1), welche zwei nebeneinander angeordnete Rotoreinheiten (19a, 19b) umfasst, die im Betrieb gegensinnig rotieren, wobei die Rotoreinheiten (19a, 19b) jeweils einen um eine senkrechte Rotationsachse (15, 20) rotierenden Läufer (21) aufweisen, der mit mehreren radial orientierten Schaufeln (22) versehen ist, die von einer Grundplatte (23) des Läufers (21) im Wesentlichen vertikal aufragen, wobei die Läufer (21) durch zumindest eine zur Grundplatte (23) parallel angeordnete Abdeckung (24) obenseitig begrenzt sind, wobei jeder Rotoreinheit (19a, 19b) ein individuell schwenkbewegliches Gutleitelement (25) zugeordnet ist, welches um eine zur Rotationsachse (15, 20) der Läufer (21) im Wesentlichen senkrecht orientierte Schwenkachse (26) schwenkbar ist und sich im Wesentlichen über die Breite des Läufers (21) erstreckt, wobei den Gutleitelementen (25) jeweils eine Verstelleinrichtung (27) zugeordnet ist, welche zum unabhängigen Einstellen der Schwenkposition des Gutleitelementes (25) relativ zur Grundplatte (23) eingerichtet ist.

## Beschreibung

Die vorliegende Erfindung betrifft eine Verteilvorrichtung für einen Mähdrescher gemäß dem Oberbegriff des Anspruches 1. Weiterhin ist ein selbstfahrender Mähdrescher gemäß dem Oberbegriff des Anspruches 14 Gegenstand der Erfindung.

Eine Verteilvorrichtung für einen Mähdrescher der eingangs genannten Art ist aus der EP 3 592 129 B1 bekannt. Die in der EP 3 592 129 B1 beschriebene Verteilvorrichtung umfasst zwei nebeneinander angeordnete Rotoreinheiten, die im Betrieb gegensinnig rotieren, um aus Erntegutresten wie Stroh sowie Spreu bestehende Restgutströme im rückwärtigen Bereich des Mähdreschers auszubringen und nach hinten sowie seitlich zu verteilen. Die Rotoreinheiten weisen jeweils einen um eine senkrechte Rotationsachse rotierenden Läufer auf, der mit mehreren radial orientierten Schaufeln versehen ist, die von einer Grundplatte des Läufers im Wesentlichen vertikal aufragen. Im Auswurfbereich der Rotoreinheiten ist ein Gutstromablenker mit einem zwei Ablenksegmenten angeordnet, durch welchen die Gutstromverteilung angepasst wird. Der einstückig ausgeführte Gutstromablenker ist an einer durch einen Ablenkerantrieb angetriebenen Drehachse befestigt, um welche der Gutstromablenker eine oszillierende Pendelbewegung ausführt. Eine alternative Ausführung der Verteilvorrichtung gemäß der EP 3 592 129 B1 sieht vor, dass der Gutstromablenker mittels des Ablenkerantriebes in vertikaler Richtung parallel zu den Rotationsachsen der rotierenden Läufer reziprok auf und ab bewegt wird.

Ausgehend vom vorstehend genannten Stand der Technik liegt der Erfindung die Aufgabe zugrunde, eine Verteilvorrichtung für einen Mähdrescher der eingangs genannten Art weiterzubilden, welche sich durch eine verbesserte Anpassbarkeit der Gutstromverteilung durch die Verteilvorrichtung auszeichnet.

Diese Aufgabe wird erfindungsgemäß durch eine Verteilvorrichtung mit den Merkmalen des Anspruches 1 gelöst. Weiterhin wird die Aufgabe durch einen selbstfahrenden Mähdrescher mit den Merkmalen des nebengeordneten Anspruches 14 gelöst. Vorteilhafte Weiterbildungen sind Gegenstand der abhängigen Ansprüche.

Gemäß dem Anspruch 1 wird eine Verteilvorrichtung für einen Mähdrescher vorgeschlagen, welche zwei nebeneinander angeordnete Rotoreinheiten umfasst, die im Betrieb gegensinnig rotieren. Die Rotoreinheiten weisen jeweils einen um eine senkrechte Rotationsachse rotierenden Läufer auf, der mit mehreren radial orientierten Schaufeln versehen ist, die von einer Grundplatte des Läufers im Wesentlichen vertikal aufragen. Die Läufer sind durch zumindest eine zur Grundplatte parallel angeordnete Abdeckung obenseitig begrenzt. Erfindungsgemäß ist vorgesehen, dass jeder Rotoreinheit ein individuell schwenkbewegliches Gutleitelement zugeordnet ist, welches um eine zur Rotationsachse der Läufer im Wesentlichen senkrecht orientierte Schwenkachse schwenkbar ist und sich im Wesentlichen über die Breite des Läufers erstreckt, wobei den Gutleitelementen jeweils eine Verstelleinrichtung zugeordnet ist, welche zum unabhängigen Einstellen der Schwenkposition des Gutleitelementes relativ zur Grundplatte eingerichtet ist.

Das den Rotoreinheiten jeweils zugeordnete, schwenkbewegliche Gutleitelement ermöglicht es, durch die Betätigung der jeweiligen Verstelleinrichtung eine unabhängige Einstellung der jeweiligen Position der Gutleitelemente vorzunehmen. Dadurch können die von den Rotoreinheiten nach hinten und seitlich ausgeworfenen Restgutströme individuell beeinflusst und angepasst werden.

Bevorzugt kann das jeweilige Gutleitelement mit einem Ende an der Abdeckung in einem äußeren Gelenkpunkt um die Schwenkachse schwenkbar angelenkt sein und mit einem anderen Ende an einem inneren Gelenkpunkt schwenkbar angelenkt sein, wobei die Position des inneren Gelenkpunktes relativ zur Grundplatte durch die Verstelleinrichtung manuell oder durch einen von der Verstelleinrichtung umfassten Aktuator automatisiert in vertikaler Richtung verstellbar ist. Der vertikale Abstand des inneren Gelenkpunktes bezüglich der Grundplatte ist somit veränderbar.

Des Weiteren kann die Position des äußeren Gelenkpunktes relativ zur Grundplatte durch eine manuelle Betätigung der Verstelleinrichtung oder durch einen von der Verstelleinrichtung umfassten separaten Aktuator in vertikaler Richtung verstellbar sein.

Insbesondere kann die Verstelleinrichtung zumindest einen Linearaktor umfassen. Der Linearaktor kann hydraulisch, pneumatisch, elektrohydraulisch, elektropneumatisch oder elektromechanisch betreibbar ausgeführt sein.

Bevorzugt kann den Verstelleinrichtungen zumindest eine Steuereinheit zugeordnet sein, welche dazu eingerichtet ist, die Verstelleinrichtungen respektive die von den Verstelleinrichtungen umfassten Aktuatoren voneinander unabhängig anzusteuern. Bevorzugt kann die Ansteuerung der Verstelleinrichtungen durch die zumindest eine Steuereinheit automatisiert erfolgen. Hierdurch kann die Verteilvorrichtung in einen Automatisierungsprozess eingebunden werden, um die Restgutstromverteilung an bestehende Betriebs- und/oder Umgebungsbedingungen anzupassen.

Weiter bevorzugt können die Schaufeln der Läufer in radialer Richtung bogenförmig gekrümmt ausgeführt sein, wobei der konkave Bereich der Schaufeln in Rotationsrichtung des jeweiligen Läufers weist.

Gemäß einer Weiterbildung können die Gutleitelemente mittels der Aktuatoren pendelnd bewegbar sein. Hierbei kann das jeweilige Gutleitelement um die Schwenkachse des äußeren Gelenkpunktes pendeln.

Gemäß einer Weiterbildung kann das jeweilige Gutleitelement eine radiale Gutleitfläche aufweisen, die sich ausgehend vom inneren Gelenkpunkt abschnittsweise in Richtung des äußeren Gelenkpunktes erstreckt. Durch die radiale Gutleitfläche erfolgt eine tangentiale Gutannahme des Restgutstromes bei der Abgabe durch die Schaufeln des Läufers, sodass eine Verbesserung der Gutströmung bei der Abgabe des Restgutstromes durch die Verteilvorrichtung erreicht wird.

Des Weiteren kann sich an die radiale Gutleitfläche eine im Wesentlichen geradlinig verlaufende Gutleitfläche anschließen, die sich zumindest bis zum äußeren Gelenkpunkt erstreckt.

Bevorzugt kann unterhalb der Abdeckung im Auswurfbereich des jeweiligen Läufers jeweils ein sich seitlich nach außen erstreckender Gutleitkanal ausgebildet sein. Der Gutleitkanal dient dazu, die von den Läufern der Rotoreinheiten abgegebenen Restgutströme zu leiten.

Insbesondere kann der jeweilige Gutleitkanal eine der randseitigen Kontur der Abdeckung abschnittsweise folgende Außenwand aufweisen, die sich ausgehend von der Abdeckung abschnittsweise vertikal nach unten in Richtung der Grundplatte erstreckt, wobei die Außenwand die Schaufeln des Läufers nur abschnittsweise überlappt. Die Außenwand weist zur Grundplatte der Läufer einen vertikalen Abstand auf, wodurch ein Spalt verbleibt, durch den der Restgutstrom anteilig nach hinten austreten kann. Die Spaltweite des Spaltes ist durch das in vertikaler Richtung verschwenkbare Gutleitelement veränderbar. Indem das Gutleitelement in Richtung der Grundplatte verschwenkt wird, nimmt die Spaltweite des Spaltes zum inneren Gelenkpunkt hin kontinuierlich ab.

Weiterhin kann der jeweilige Gutleitkanal eine nach außen offene Struktur aufweisen. Durch die nach außen offene Struktur kann der Restgutstrom anteilig seitlich austreten. Die nach außen offene Struktur ist dabei im Wesentlichen senkrecht zur Außenwand orientiert.

Des Weiteren kann der jeweilige Gutleitkanal an seinem seitlich nach außen gerichteten Auswurfende eine um eine horizontale Achse verschwenkbare Auswurfklappe aufweisen. Mittels der verschwenkbaren Auswurfklappe kann die Auswurfweite des anteilig seitlich austretenden Restgutstromes angepasst werden.

Bevorzugt kann die jeweilige Auswurfklappe manuell oder durch eine Aktorik um die horizontale Achse voneinander unabhängig verschwenkbar ausgeführt sein, um eine Schwenkposition relativ zur Auswurföffnung des Gutleitkanals einzustellen. Bei einer manuellen Einstellung der Schwenkposition der Auswurfklappe ist die maximale Auswurfweite statisch vorgegeben. Auf äußere Einflüsse, wie beispielsweise Seitenwind, kann dabei nur durch eine erneute manuelle Anpassung der Schwenkpositionen der Auswurfklappen durch einen Bediener der Verteilvorrichtung reagiert werden. Die Einstellung der Schwenkposition der Auswurfklappen durch jeweils eine voneinander unabhängige ansteuerbare Aktorik ermöglicht eine dynamische Anpassung der Schwenkpositionen, um auf sich ändernde äußere Einflüsse, die eine Anpassung der Auswurfweite erforderlich werden lassen, reagieren zu können. Die Ansteuerung der Aktorik kann bevorzugt ebenfalls durch die zumindest eine Steuereinheit erfolgen.

Insbesondere können die Rotoreinheiten bezüglich einer Symmetrieachse der Verteilvorrichtung spiegelbildlich angeordnet sein. Die Symmetrieachse der Verteilvorrichtung verläuft bevorzugt parallel zur Längsachse des Mähdreschers.

Die eingangs gestellte Aufgabe wird weiterhin durch einen selbstfahrenden Mähdrescher mit den Merkmalen des Anspruches 14 gelöst.

Gemäß dem Anspruch 14 wird ein selbstfahrender Mähdrescher mit einer Dreschvorrichtung, einer Abscheidevorrichtung, einer Reinigungsvorrichtung, welche Reinigungssiebe sowie eine den Reinigungssieben der Reinigungsvorrichtung zugeordnete Gebläseanordnung umfasst, sowie einer Verteilvorrichtung vorgeschlagen, wobei die Verteilvorrichtung nach einem der Ansprüche 1 bis 13 ausgeführt ist. Auf alle Ausführungen zu der erfindungsgemäßen Verteilvorrichtung darf verwiesen werden.

Die erfindungsgemäße Verteilvorrichtung kann dabei sowohl als Spreuverteiler verwendet werden, welcher der Reinigungsvorrichtung zum Ausbringen von Spreu und dergleichen nachgeordnet ist, als auch als einer Häckselvorrichtung nachgeordnete Verteilvorrichtung, welche im Wesentlichen gehäckseltes Stroh ausbringt. Gemäß einer weiteren Alternative kann die erfindungsgemäße Verteilvorrichtung zur gleichzeitigen Ausbringung von Spreu und Stroh ausgeführt sein. Hierzu können der erfindungsgemäßen Verteilvorrichtung von der Reinigungsvorrichtung abgeschiedene Nichtkornbestandteile, Spreu, Kurzstroh und dergleichen, sowie von der Häckselvorrichtung zerkleinertes Stroh zugeführt werden, die als ein gemeinsamer Resterntegutstrom durch die Verteilvorrichtung ausgebracht werden.

Insbesondere kann die Gebläseanordnung als eine der Reinigungsvorrichtung nachgeordnete Sauggebläseanordnung ausgeführt sein, welche zumindest ein in einem Gehäuse angeordnetes Sauggebläse aufweist, in welchem zumindest ein Läufer des Sauggebläses um eine vertikale Achse rotiert, um einen Saugluftstrom aus einem zumindest die Reinigungsvorrichtung umgebenden Prozessraum des Mähdreschers anzusaugen, welcher die Reinigungssiebe durchströmt. Hierbei kann der Läufer des zumindest einen Sauggebläses als der zumindest einen Läufer der Verteilvorrichtung ausgebildet sein.

Die vorliegende Erfindung wird nachstehend anhand eines in den Zeichnungen dargestellten Ausführungsbeispieles näher erläutert.

Es zeigen:
- Fig. 1: schematisch und exemplarisch eine Darstellung eines Mähdreschers in einer Teilansicht;
- Fig. 2: schematisch und exemplarisch eine erfindungsgemäße Verteilvorrichtung für einen Mähdrescher in einer perspektivischen Ansicht von hinten;
- Fig. 3: schematisch und exemplarisch eine seitliche Ansicht der Verteilvorrichtung gemäß Fig. 2;
- Fig. 4: schematisch und exemplarisch eine Teilansicht auf die Verteilvorrichtung von schräg oben; und
- Fig. 5: schematisch und exemplarisch eine Teilansicht der Verteilvorrichtung von unten.

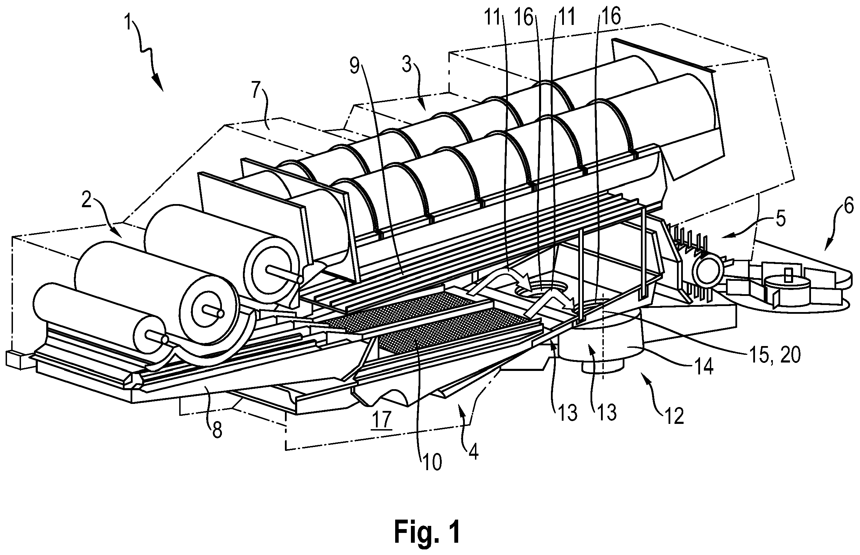

In Fig. 1 ist schematisch und exemplarisch eine Darstellung eines Mähdreschers 1 in einer Teilansicht gezeigt. Der Mähdrescher 1 umfasst eine Dreschvorrichtung 2, die als ein Mehrtrommeldreschwerk ausgeführt ist, eine Abscheidevorrichtung 3, die im dargestellten Ausführungsbeispiel mit zumindest einem nach dem Axialflussprinzip arbeitenden Trennrotor ausgeführt ist, eine Reinigungsvorrichtung 4, eine Häckselvorrichtung 5 sowie eine Verteilvorrichtung 6, die hier und vorzugsweise als Radialverteiler ausgeführt ist. Die Dreschvorrichtung 2, die Abscheidevorrichtung 3, die Reinigungsvorrichtung 4 sowie die Häckselvorrichtung 5 sind zumindest teilweise von einem - strichliniiert dargestellten - Maschinengehäuse 7 umgeben. Unterhalb der Dreschvorrichtung 2 ist ein oszillierend angetriebener Vorbereitungsboden 8 angeordnet. Unterhalb der Abscheidevorrichtung 3 ist ein ebenfalls oszillierend angetriebener Rücklaufboden 9 angeordnet, der sich im Wesentlichen parallel zu der Abscheidevorrichtung 3 erstreckt. Die Reinigungsvorrichtung 4 umfasst zumindest zwei in einem Siebkasten angeordnete Reinigungssiebe 10, die als zumindest ein Obersieb und zumindest ein darunterliegendes Untersieb ausgebildet sind. Der Vorbereitungsboden 8 liegt oberhalb der Siebebene der Reinigungsvorrichtung 4, hier des Obersiebes. Der Reinigungsvorrichtung 4 ist eine Sauggebläseanordnung 12 mit zumindest einem Sauggebläse 13 nachgeordnet. Hier und vorzugsweise weist die Sauggebläseanordnung 12 zwei Sauggebläse 13 auf, welche als Reinigungsgebläse der Reinigungsvorrichtung 4 dienen. Die Sauggebläseanordnung 12 weist zumindest ein Gehäuse 14 auf, in welchem ein Läufer des zumindest einen Sauggebläses 13 um eine vertikale Rotationsachse 15 rotiert, um einen Saugluftstrom 11 durch Öffnungen 16 aus einem zumindest die Reinigungsvorrichtung 4 umgebenden Prozessraum 17 des Mähdreschers 1 anzusaugen. Der Prozessraum 17 ist durch das Maschinengehäuse 7 zumindest teilweise umschlossen.

In dem Prozessraum 17 sind die Dreschvorrichtung 2, die Abscheidevorrichtung 3 und/oder die Reinigungsvorrichtung 4 angeordnet. Der dem Prozessraum 17 entnommene Saugluftstrom 11 durchströmt dabei unter anderem die Reinigungssiebe 10 der Reinigungsvorrichtung 4. An das zumindest eine Gehäuse 14 der Sauggebläseanordnung 12 schließt sich ein Kanalsegment an, welches die Sauggebläseanordnung 12 mit der Verteilvorrichtung 6 verbinden kann. Die Sauggebläseanordnung 12 saugt einen Luft- und Gutstrom als Saugluftstrom 11 an, der im Wesentlichen im Bereich der Dreschvorrichtung 2 sowie der Reinigungsvorrichtung 4 als auch unterhalb des Vorbereitungsbodens 8 zugeführt wird, und leitet diesen nach dem Um- und Durchströmen des Vorbereitungsbodens 8 und der Reinigungsvorrichtung 4 durch das Kanalsegment nach außen.

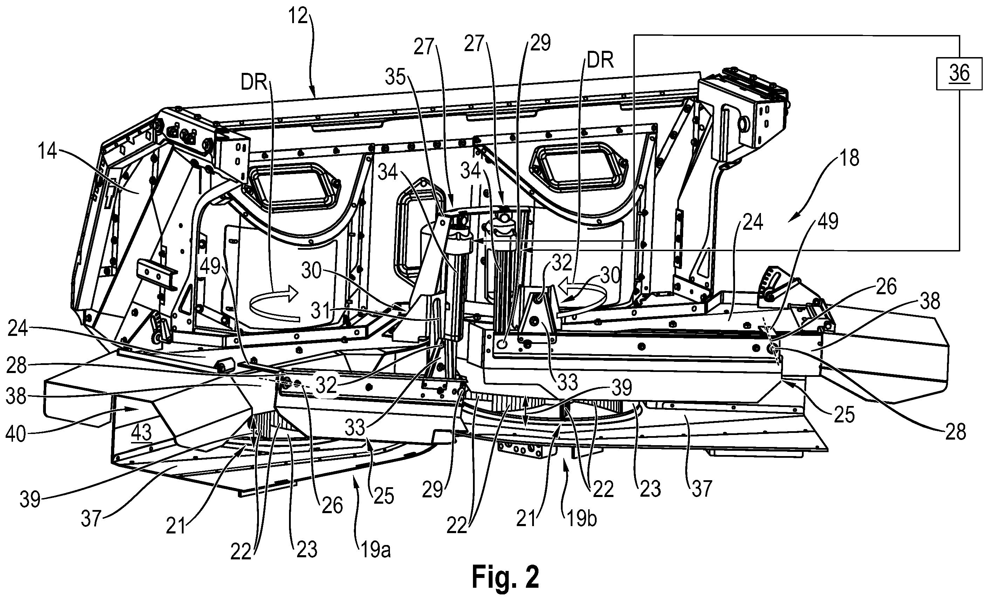

Die Darstellung in Fig. 2 zeigt schematisch und exemplarisch eine erfindungsgemäße Verteilvorrichtung 18 für den Mähdrescher 1 in einer perspektivischen Ansicht von hinten. Die Verteilvorrichtung 18 ist hier und vorzugsweise Bestandteil der Sauggebläseanordnung 12. Die erfindungsgemäße Verteilvorrichtung 18 kann auch als Radialverteiler entsprechend der Fig. 1 verwendet werden, welche das von der Häckselvorrichtung 5 abgegebene Resterntegut vorzugsweise über die Arbeitsbreite des Mähdreschers 1 verteilt.

Die Verteilvorrichtung 18 umfasst zwei nebeneinander angeordnete Rotoreinheiten 19a, 19b, die im Betrieb gegensinnig rotieren, wie durch Pfeile DR angedeutet. Die Rotoreinheiten 19a, 19b weisen jeweils einen um eine senkrechte Rotationsachse 20 rotierenden Läufer 21 auf. Bei den Läufern 21 der Rotoreinheiten 19a, 19b handelt es sich hier und vorzugsweise um die Läufer der beiden Sauggebläse 13.

Der jeweilige Läufer 21 ist mit mehreren radial orientierten Schaufeln 22 versehen, die der Förderung eines von der Sauggebläseanordnung 12 mitgeführten Restgutstromes dienen. Der vom Saugluftstrom 11 mitgeführte Restgutstrom umfasst im Wesentlichen Kurzstroh, Spreu und sonstige von der Reinigungsvorrichtung 4 abgeschiedene Bestandteile des gereinigten Erntegutes. Die Schaufeln 22 ragen von einer Grundplatte 23 des Läufers 21 im Wesentlichen vertikal auf. Die Läufer 21 sind durch zumindest eine zur Grundplatte 23 parallel angeordnete Abdeckung 24 obenseitig begrenzt.

Jeder Rotoreinheit 19a, 19b ist ein individuell schwenkbewegliches Gutleitelement 25 zugeordnet. Das jeweilige Gutleitelement 25 ist um eine zur senkrechten Rotationsachse 20 der Läufer 21 im Wesentlichen senkrecht verlaufende Schwenkachse 26 schwenkbar. Das jeweilige Gutleitelement 25 erstreckt sich im Wesentlichen über die Breite des Läufers 21 der jeweiligen Rotoreinheit 19a, 19b. Den Gutleitelementen 25 ist jeweils eine Verstelleinrichtung 27 zugeordnet, welche zum unabhängigen Einstellen der Schwenkposition des Gutleitelementes 25 relativ zur Grundplatte 23 eingerichtet ist.

Die Darstellung in Fig. 2 zeigt beispielhaft das der Rotoreinheit 19a zugehörige Gutleitelement 25 in einer aktiven Position und das der Rotoreinheit 19b zugehörige Gutleitelement 25 in einer passiven Position.

In der bespielhaft dargestellten aktiven Position des Gutleitelementes 25 befindet sich das Gutleitelement 25 in seiner untersten Stellung, sodass die Abgabe des von der Rotoreinheit 19a geförderten Restgutstromes maximal beeinflusst wird. Es wird ein größerer Anteil des Restgutstromes seitlich nach außen abgelenkt.

In der passiven Position des Gutleitelementes 25 befindet sich das Gutleitelement 25 in seiner obersten Stellung, in welcher das Gutleitelement 25 nahezu keinen Einfluss auf die Abgabe des von der Rotoreinheit 19b geförderten Restgutstromes hat.

Mittels der jeweiligen Verstelleinrichtung 27 lassen sich die Gutleitelemente 25 stufenlos zwischen der untersten Stellung, der passiven Position eines Gutleitelementes 25, und der obersten Stellung, der aktiven Position eines Gutleitelementes 25, bewegen.

Das jeweilige Gutleitelement 25 ist mit einem Ende an der Abdeckung 24 in einem äußeren Gelenkpunkt 28 um die Schwenkachse 26 schwenkbar angelenkt und mit einem anderen Ende an einem inneren Gelenkpunkt 29 schwenkbar angelenkt. Die Position des inneren Gelenkpunktes 29 relativ zur Grundplatte 23 ist durch die Verstelleinrichtung 27 manuell oder, wie in Fig. 2 dargestellt, automatisiert in vertikaler Richtung verstellbar. Das jeweilige Gutleitelement 25 ist im dargestellten Ausführungsbeispiel mit seinem äußeren Gelenkpunkt 28 an einem im Wesentlichen vertikal verlaufenden Schenkel eines Winkelelement 49 befestigt, welches mit seinem im Wesentlichen horizontal verlaufenden Schenkel mit der Abdeckung 24 verbunden ist.

Zur Führung der Schwenkbewegungen des jeweiligen Gutleitelementes 25 ist eine Führungseinrichtung 30 vorgesehen. Die jeweilige Führungseinrichtung 30 weist eine bogenförmige Führungsbahn 31 auf, in welcher das Gutleitelement 25 mit einem Führungselement 32 geführt ist. Das Führungselement 32 ist an einem im Bereich des inneren Gelenkpunktes 29 angeordneten Führungsabschnitt 33 am Gutleitelement 25 angeordnet. Das Führungselement 32 kann als Führungsrolle oder als Kulissenstein ausgeführt sein.

Zur automatisierten Verstellung des inneren Gelenkpunktes 29 relativ zur Grundplatte 23 ist ein Aktuator 34 vorgesehen, der hier und vorzugsweise als Linearaktuator ausgeführt ist. Der Linearaktuator kann hydraulisch, pneumatisch, elektrohydraulisch, elektropneumatisch oder elektromechanisch betreibbar ausgeführt sein.

Der Aktuator 34 ist von einer Halterung 35 aufgenommen, die auf der Oberseite der zumindest einen Abdeckung 24 oder oberhalb dieser angeordnet ist. Der jeweilige Aktuator 34 ist mit einem Ende an der Halterung 35 angelenkt und mit seinem anderen Ende am inneren Gelenkpunkt 29 des Gutleitelementes 25. Somit kann der jeweilige Aktuator 34 der durch die Führungseinrichtung 30 geführten Schwenkbewegung des Gutleitelementes 25 folgen. Die Gutleitelemente 25 können mittels der Aktuatoren 34 unabhängig voneinander pendelnd bzw. oszillierend bewegbar sein.

Den Verstelleinrichtungen 27 ist zumindest eine Steuereinheit 36 zugeordnet ist, welche dazu eingerichtet ist, die Aktuatoren 34 der Verstelleinrichtungen 27 voneinander unabhängig anzusteuern. Bevorzugt kann die Ansteuerung der Verstelleinrichtungen 27 durch die zumindest eine Steuereinheit 36 automatisiert erfolgen. Hierdurch kann die Verteilvorrichtung 18 in einen Automatisierungsprozess eingebunden werden. Der Automatisierungsprozess kann Betriebsparameter des Mähdreschers 1 sowie der Verteilvorrichtung 18 berücksichtigen, um die Verteilung des Restgutstromes zu optimieren.

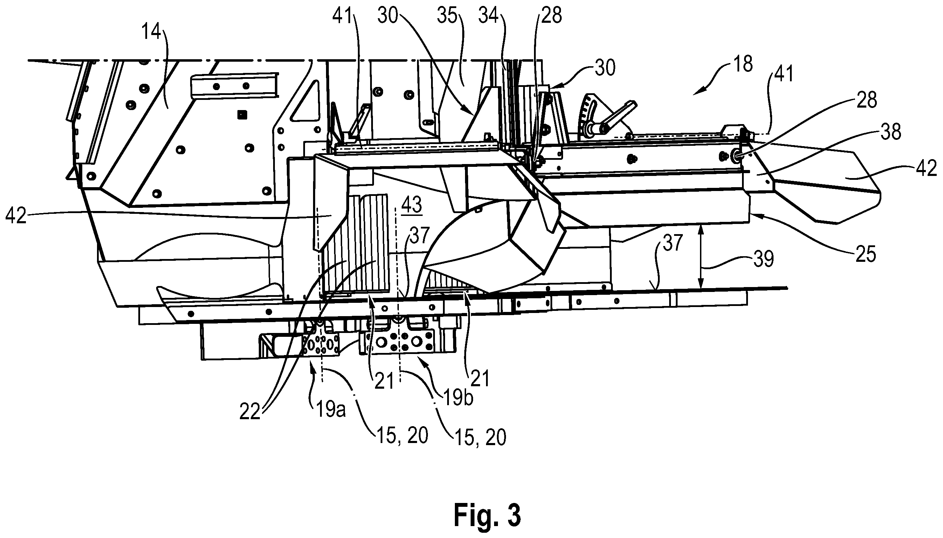

Die Darstellung in Fig. 3 zeigt schematisch und exemplarisch eine seitliche Ansicht der Verteilvorrichtung gemäß Fig. 2.

Unterhalb der zumindest einen Abdeckung 24 ist im Auswurfbereich des jeweiligen Läufers 21 jeweils ein sich seitlich nach außen erstreckender Gutleitkanal 40 ausgebildet. Die zumindest einen Abdeckung 24 begrenzt den Gutleitkanal 40 nach oben. Nach unten ist der Gutleitkanal 40 durch ein zu der zumindest einen Abdeckung 24 parallel angeordnetes Bodensegment 37 begrenzt. Der Gutleitkanal 40 weist eine nach außen offene Struktur auf. Nach außen offene Struktur heißt dabei, dass der Gutleitkanal 40, bezogen auf eine Längsachse des Mähdreschers 1, im Wesentlichen senkrecht zu dieser orientiert ist, um Resterntegut seitlich nach außen zu lenken.

Der jeweilige Gutleitkanal 40 weist eine der randseitigen Kontur der Abdeckung 24 abschnittsweise folgende Außenwand 38 auf. Die Außenwand 38 begrenzt den Gutleitkanal 40 in Auswurfrichtung Der Verlauf der Außenwand 38 korrespondiert mit der randseitigen Kontur der Abdeckung 24. Die Außenwand 38 erstreckt sich ausgehend von der Abdeckung 24 abschnittsweise vertikal nach unten in Richtung der Grundplatte 23. Die Außenwand 38 überlappt die Schaufeln 22 des Läufers 21 in vertikaler Richtung gesehen nur abschnittsweise. Durch die nur abschnittsweise Überlappung der Schaufeln 22 durch die Außenwand 38 des Gutleitkanals 40 in vertikaler Richtung verbleibt ein Spalt 39, durch den der Restgutstrom anteilig nach hinten austreten kann. Die Spaltweite des Spaltes 39 ist durch das in vertikaler Richtung verschwenkbare Gutleitelement 25 veränderbar. Indem das Gutleitelement 25 in Richtung der Grundplatte 23 respektive des Bodensegmentes 37 verschwenkt wird, nimmt der Verlauf der Spaltweite des Spaltes 39 zwischen der Unterkante des Gutleitelementes 25 und dem Bodensegment 37 ausgehend vom äußeren Gelenkpunkt 28 zum inneren Gelenkpunkt 29 hin ab. Entsprechend lässt sich der Spaltweite des Spaltes 39 durch eine gegensinnige Bewegung des Gutleitelementes 25 vergrößern.

Der jeweilige Gutleitkanal 40 weist an seinem seitlich nach außen gerichteten Auswurfende eine um eine horizontale Achse 41 verschwenkbare Auswurfklappe 42 auf. Die jeweilige Auswurfklappe 42 kann manuell, wie in Fig. 3 dargestellt, oder durch einen Aktuator voneinander unabhängig um die horizontale Achse 41 verschwenkbar ausgeführt sein, um eine Schwenkposition relativ zur Auswurföffnung 43 des Gutleitkanals 40 einzustellen.

Die jeweilige Auswurfklappe 42 weist einen im Wesentlichen U-förmigen Querschnitt auf. Dabei sind die einander gegenüberliegenden Schenkel voneinander abweichend ausgeformt. Der dem Gehäuse 14 zugewandte Schenkel der Auswurfklappe 42 erstreckt sich im Wesentlichen senkrecht zu einer die beiden Schenkel verbindenden Oberseite. Der gegenüberliegende Schenkel ist gegenüber der Oberseite der Auswurfklappe 42 zweifach abgewinkelt. Ein erster Abschnitt des abgewinkelten Schenkels weist einen Winkel von etwa 135° zur Oberseite auf. Ein zweiter Abschnitt, der sich an den ersten Abschnitt anschließt, verläuft im Wesentlichen parallel zum gegenüberliegenden, im Wesentlichen senkrecht orientierten Schenkel der Auswurfklappe 42.

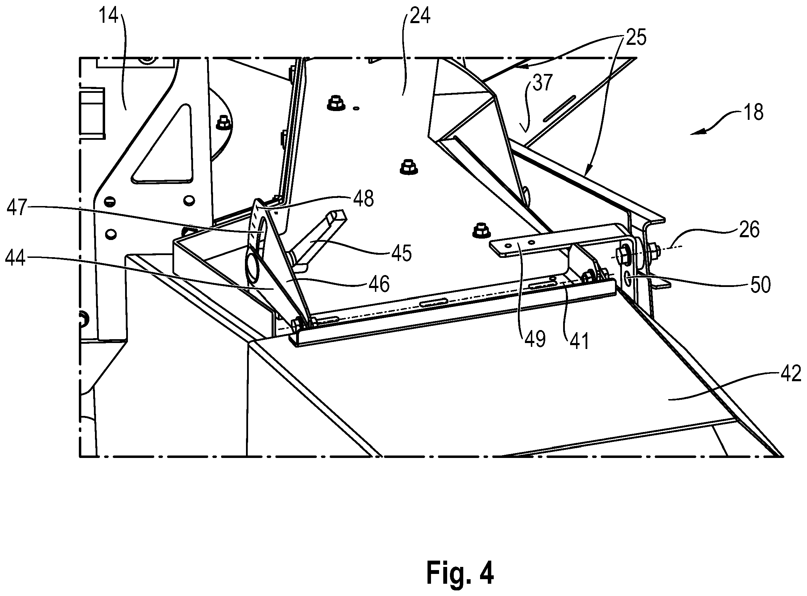

In Fig. 4 ist schematisch und exemplarisch eine Teilansicht auf die Verteilvorrichtung 18 von schräg oben dargestellt. Zu sehen ist eine der Auswurfklappen 42, die um die horizontale Achse 41 schwenkbar an der Oberseite der Abdeckung 24 angelenkt ist. Um den Schwenkwinkel der Auswurfklappe 42 relativ zur Auswurföffnung 43 des Gutleitkanals 40 einzustellen, ist ein mit der Auswurfklappe 42 drehfest verbundener Hebelarm 44 vorgesehen, an dessen freien Ende ein Klemmhebel 45 angeordnet ist. Ein den Hebelarm 44 und den Klemmhebel 45 verbindender Bolzen erstreckt sich durch ein mit einem bogenförmigen Längsschlitz 47 versehenes Führungselement 46. Das Führungselement 46 weist eine im Wesentlichen kreissektorförmige Form auf. Auf dem Führungselement 46 ist benachbart zum Längsschlitz 47 eine Skala 48 vorgesehen. Mittels des Klemmhebels 45 ist der Schwenkwinkel der Auswurfklappe 42 manuell einstellbar.

Alternativ können den Auswurfklappen 42 Aktuatoren zugeordnet sein, durch welche der Schwenkwinkel der Auswurfklappen 42 veränderbar ist. Die den Auswurfklappen 42 zugeordneten Aktuatoren sind dabei bevorzugt mit der zumindest einen Steuereinheit 36 zu ihrer Ansteuerung verbunden, welche auch die Aktuatoren 34 der Verstelleinrichtungen 27 ansteuert.

Weiterhin zeigt Fig. 4 schematisch und exemplarisch eine manuelle Verstellmöglichkeit zur Höheneinstellung des äußeren Gelenkpunktes 28 des jeweiligen Gutleitelementes 25. Der im Wesentlichen vertikale Schenkel des Winkelelementes 49 weist zumindest zwei zueinander beabstandete Bohrungen 50 auf, wodurch eine Änderung der Höhenposition des äußeren Gelenkpunktes 28 relativ zur Grundplatte 23 ermöglicht wird. Anstelle der manuellen Einstellung der Höhenposition durch das manuelle Versetzten des äußeren Gelenkpunktes 28 entsprechend der Bohrungen 50 kann auch hier eine Aktuatorik vorgesehen sein, welche eine automatische Anpassung ermöglicht.

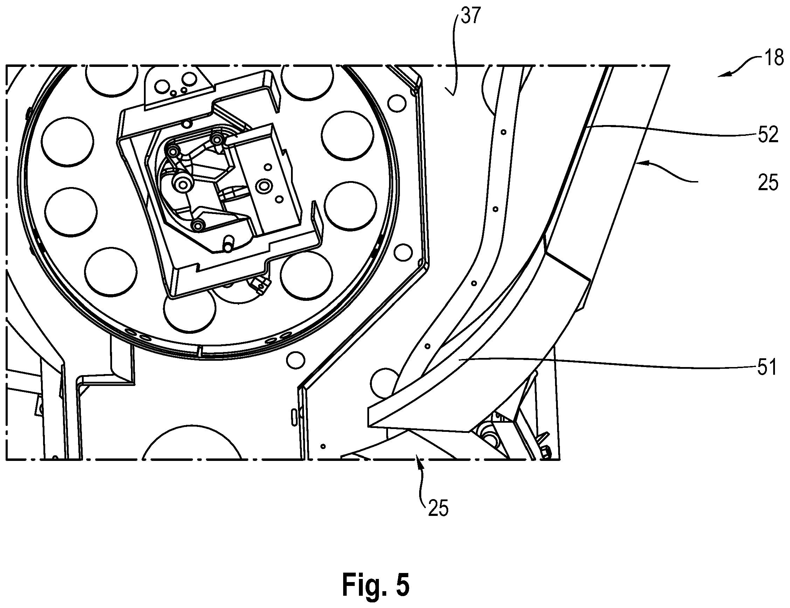

In Fig. 5 ist schematisch und exemplarisch eine Teilansicht der Verteilvorrichtung 18 von unten dargestellt. Gezeigt ist die Unterseite des Bodensegmentes 37 sowie eines der beiden Gutleitelemente 25.

Das jeweilige Gutleitelement 25 weist eine radiale Gutleitfläche 51 auf, die sich ausgehend vom inneren Gelenkpunkt 29 abschnittsweise in Richtung des äußeren Gelenkpunktes 28 erstreckt. An die radiale Gutleitfläche 51 schließt sich eine im Wesentlichen geradlinig verlaufende Gutleitfläche 52 an, die sich zumindest bis zum äußeren Gelenkpunkt 28 des Gutleitelementes 25 erstreckt. Die radiale Gutleitfläche 51 des jeweiligen Gutleitelementes 25 nimmt den von den Schaufeln 22 der Rotoreinheit 19a bzw. 19b abgegebenen Restgutstrom tangential an und lenkt diesen in Richtung der linearen Gutleitfläche 52 um. Die lineare Gutleitfläche 52 führt den Restgutstrom anteilig der Auswurföffnung 43 zu. Ein Teil des von der Rotoreinheit 19a bzw. 19b abgegebenen Restgutstromes wird bereits durch den Spalt 39 nach außen abgegeben.

**Bezugszeichenliste**

| | | | |
|---|---|---|---|
| 1 | Mähdrescher | 33 | Führungsabschnitt |
| 2 | Dreschvorrichtung | 34 | Aktuator |
| 3 | Abscheidevorrichtung | 35 | Halterung |
| 4 | Reinigungsvorrichtung | 36 | Steuereinheit |
| 5 | Häckselvorrichtung | 37 | Bodensegment |
| 6 | Verteilvorrichtung | 38 | Außenwand |
| 7 | Maschinengehäuse | 39 | Spalt |
| 8 | Vorbereitungsboden | 40 | Gutleitkanal |
| 9 | Rücklaufboden | 41 | Horizontale Achse |
| 10 | Reinigungssiebe | 42 | Auswurfklappe |
| 11 | Saugluftstrom | 43 | Auswurföffnung |
| 12 | Sauggebläseanordnung | 44 | Hebelarm |
| 13 | Sauggebläse | 45 | Klemmhebel |
| 14 | Gehäuse | 46 | Führungselement |
| 15 | Rotationsachse | 47 | Längsschlitz |
| 16 | Öffnung | 48 | Skala |
| 17 | Prozessraum | 49 | Winkelelement |
| 18 | Verteilvorrichtung | 50 | Bohrung |
| 19a | Rotoreinheit | 51 | Radiale Gutleitfläche |
| 19b | Rotoreinheit | 52 | Gutleitfläche |
| 20 | Rotationsachse | | |
| 21 | Läufer | | |
| 22 | Schaufel | | |
| 23 | Grundplatte | | |
| 24 | Abdeckung | | |
| 25 | Gutleitelement | | |
| 26 | Schwenkachse | | |
| 27 | Verstelleinrichtung | | |
| 28 | Äußerer Gelenkpunkt | | |
| 29 | Innerer Gelenkpunkt | | |
| 30 | Führungseinrichtung | | |
| 31 | Führungsbahn | | |
| 32 | Führungselement | | |

## Patentansprüche

1. Verteilvorrichtung (18) für einen Mähdrescher (1), welche zwei nebeneinander angeordnete Rotoreinheiten (19a, 19b) umfasst, die im Betrieb gegensinnig rotieren, wobei die Rotoreinheiten (19a, 19b) jeweils einen um eine senkrechte Rotationsachse (15, 20) rotierenden Läufer (21) aufweisen, der mit mehreren radial orientierten Schaufeln (22) versehen ist, die von einer Grundplatte (23) des Läufers (21) im Wesentlichen vertikal aufragen, wobei die Läufer (21) durch zumindest eine zur Grundplatte (23) parallel angeordnete Abdeckung (24) obenseitig begrenzt sind, **dadurch gekennzeichnet, dass** jeder Rotoreinheit (19a, 19b) ein individuell schwenkbewegliches Gutleitelement (25) zugeordnet ist, welches um eine zur Rotationsachse (15, 20) der Läufer (21) im Wesentlichen senkrecht orientierte Schwenkachse (26) schwenkbar ist und sich im Wesentlichen über die Breite des Läufers (21) erstreckt, wobei den Gutleitelementen (25) jeweils eine Verstelleinrichtung (27) zugeordnet ist, welche zum unabhängigen Einstellen der Schwenkposition des Gutleitelementes (25) relativ zur Grundplatte (23) eingerichtet ist.

2. Verteilvorrichtung (18) nach Anspruch 1, **dadurch gekennzeichnet, dass** das jeweilige Gutleitelement (25) mit einem Ende an der Abdeckung (24) in einem äußeren Gelenkpunkt (28) um die Schwenkachse (26) schwenkbar angelenkt ist und mit einem anderen Ende an einem inneren Gelenkpunkt (29) angelenkt ist, wobei die Position des inneren Gelenkpunktes (29) relativ zur Grundplatte (23) durch die Verstelleinrichtung (27) manuell oder durch einen von der Verstelleinrichtung (27) umfassten Aktuator (34) automatisiert in vertikaler Richtung verstellbar ist.

3. Verteilvorrichtung (18) nach Anspruch 2, **dadurch gekennzeichnet, dass** die Position des äußeren Gelenkpunktes (28) relativ zur Grundplatte (23) durch eine manuelle Betätigung oder durch einen von der Verstelleinrichtung (27) umfassten separaten Aktuator in vertikaler Richtung verstellbar ist.

4. Verteilvorrichtung (18) nach Anspruch 2 oder 3, **dadurch gekennzeichnet, dass** den Verstelleinrichtungen (27) zumindest eine Steuereinheit (36) zugeordnet ist, welche dazu eingerichtet ist, die Aktuatoren (34) der Verstelleinrichtungen (27) voneinander unabhängig anzusteuern.

5. Verteilvorrichtung (18) nach Anspruch 4, **dadurch gekennzeichnet, dass** die Gutleitelemente (25) mittels der Aktuatoren (34) pendelnd bewegbar sind.

6. Verteilvorrichtung (18) nach einem der Ansprüche 2 bis 5, **dadurch gekennzeichnet, dass** das jeweilige Gutleitelement (25) eine radiale Gutleitfläche (51) aufweist, die sich ausgehend vom inneren Gelenkpunkt (29) abschnittsweise in Richtung des äußeren Gelenkpunktes (28) erstreckt.

7. Verteilvorrichtung (18) nach Anspruch 6, **dadurch gekennzeichnet, dass** sich an die radiale Gutleitfläche (51) eine im Wesentlichen geradlinig verlaufende Gutleitfläche (52) anschließt, die sich zumindest bis zum äußeren Gelenkpunkt (28) erstreckt.

8. Verteilvorrichtung (18) nach einem der vorangehenden Ansprüche, **dadurch gekennzeichnet, dass** unterhalb der Abdeckung (24) im Auswurfbereich des jeweiligen Läufers (21) jeweils ein sich seitlich nach außen erstreckender Gutleitkanal (40) ausgebildet ist.

9. Verteilvorrichtung (18) nach Anspruch 8, **dadurch gekennzeichnet, dass** der jeweilige Gutleitkanal (40) eine der randseitigen Kontur der Abdeckung (24) abschnittsweise folgende Außenwand (38) aufweist, die sich ausgehend von der Abdeckung (24) abschnittsweise vertikal nach unten in Richtung der Grundplatte (23) erstreckt, wobei die Außenwand (38) die Schaufeln (22) des Läufers (21) nur abschnittsweise überlappt.

10. Verteilvorrichtung (18) nach Anspruch 8 oder 9, **dadurch gekennzeichnet, dass** der Gutleitkanal (40) eine nach außen offene Struktur aufweist.

11. Verteilvorrichtung (18) nach einem der Ansprüche 8 bis 10, **dadurch gekennzeichnet, dass** der jeweilige Gutleitkanal (40) an seinem seitlich nach außen gerichteten Auswurfende eine um eine horizontale Achse (41) verschwenkbare Auswurfklappe (42) aufweist.

12. Verteilvorrichtung (18) nach Anspruch 11, **dadurch gekennzeichnet, dass** die jeweilige Auswurfklappe (42) manuell oder durch einen Aktuator voneinander unabhängig um die horizontale Achse (41) verschwenkbar ausgeführt ist, um eine Schwenkposition relativ zur Auswurföffnung (43) des Gutleitkanals (40) einzustellen.

13. Verteilvorrichtung (18) nach einem der vorangehenden Ansprüche, **dadurch gekennzeichnet, dass** die Rotoreinheiten (19a, 19b) bezüglich einer Symmetrieachse der Verteilvorrichtung (18) spiegelbildlich angeordnet sind.

14. Selbstfahrender Mähdrescher (1) mit einer Dreschvorrichtung (2), einer Abscheidevorrichtung (3), einer Reinigungsvorrichtung (4), welche Reinigungssiebe (10) sowie eine den Reinigungssieben (10) der Reinigungsvorrichtung (4) zugeordnete Gebläseanordnung (12) umfasst, sowie einer Verteilvorrichtung (18), **dadurch gekennzeichnet, dass** die Verteilvorrichtung (18) nach einem der Ansprüche 1 bis 13 ausgeführt ist.

15. Selbstfahrender Mähdrescher (1) nach Anspruch 14, **dadurch gekennzeichnet, dass** die Gebläseanordnung (12) als eine der Reinigungsvorrichtung (4) nachgeordnete Sauggebläseanordnung (12) ausgeführt ist, welche zumindest ein in einem Gehäuse (14) angeordnetes Sauggebläse (13) aufweist, in welchem zumindest ein Läufer (21) des Sauggebläses (13) um eine vertikale Achse (15, 20) rotiert, um einen Saugluftstrom (11) aus einem zumindest die Reinigungsvorrichtung (4) umgebenden Prozessraum (17) des Mähdreschers (1) anzusaugen, welcher die Reinigungssiebe (10) durchströmt.
